# EUROPEAN PATENT APPLICATION

(11) **EP 2 372 447 A1**
(43) Date of publication of application: **05.10.2011**
(21) Application number: 09834522.6
(22) Date of filing: 25.12.2009
(51) Int. Cl.: G02F 1/167, G02F 1/1345

(54) **INFORMATION DISPLAY PANEL**

(30) Priority: 25.12.2008 JP 2008331490
(71) Applicant: Bridgestone Corporation, Tokyo 104-8340 (JP)
(72) Inventor: OHNO, Shingo, Kodaira-shi Tokyo 187-8531 (JP); TANAKA, Kanji, Kodaira-shi Tokyo 187-8531 (JP); SAKURAI, Ryo, Kodaira-shi Tokyo 187-8531 (JP)
(74) Representative: Oxley, Robin John George
(86) International application number: PCT/JP2009/007291
(87) International publication number: WO 2010/073716

(57) **Abstract**

Provided is an information display panel, which includes: a transparent first substrate having transparent pixel electrodes formed in an information display screen region, first connecting electrodes formed as line electrodes drawn from the pixel electrodes to a region outside the information display screen region, and third connecting electrode formed as different line electrodes that are not connected to the first connecting electrodes; and a film-like second substrate having pixel electrodes formed in the information display screen region, and second connecting electrodes formed as line electrodes drawn from the pixel electrodes to a region outside the information display screen region, in which the transparent pixel electrodes on the transparent first substrate and the pixel electrodes on the second substrate are opposed to each other so as to form a space between the first substrate and the second substrate opposing to each other, the space having a display media sealed therein in the information display screen region; in which the second connecting electrodes and one of electrode terminals of each of the third connecting electrodes are connected to each other via an anisotropic conductive connecting member; and in which another one of the electrode terminals of each of the third connecting electrodes and an electrode terminal of the first connecting electrodes are electrically connected, via a connecting wiring substrate, to a connecting electrode terminal provided to a driver circuit board on a drive unit side, which is disposed on a rear side of the second substrate, the connecting wiring substrate being mounted without being folded back while allowing a connecting end to the driver circuit side to face inward to be electrically connected to the drive unit, to thereby drive the display media via the opposing pixel electrodes in order to cause information to be displayed.

## Description

### TECHNICAL FIELD

The present invention relates to an information display panel in which an electrically drivable display medium is sealed between an observation-side panel substrate and a back-side panel substrate, and the display medium is driven through a counter electrode formed of electrodes which are provided on the two panel substrates and opposed to each other, to thereby display information such as an image.

### RELATED ART

Conventionally, there has been known a liquid crystal display device, in which a circuit wiring part of, for example, a driver circuit is formed on a back surface side of the liquid crystal display panel so that the circuit wiring part is connected to the driver circuit of the liquid crystal display panel through a flexible cable configured as being folded back, to thereby provide a liquid crystal display device which is thinner in thickness, smaller in area, and narrower in frame of the device (see, for example, JP 2000-98417 A, hereinafter referred to as Patent Document).

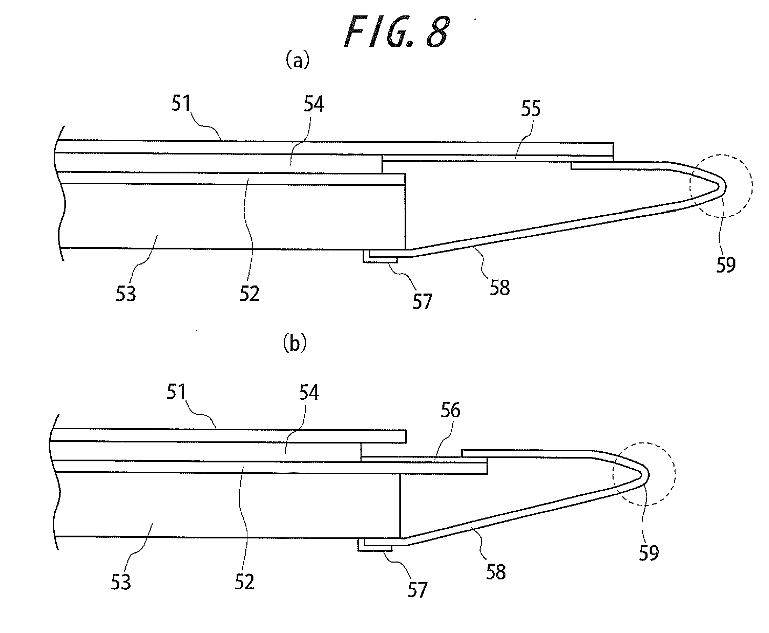

Figs. 8(a) and 8(b) are views for illustrating examples of the conventional information display panel. In the examples illustrated in Figs. 8(a) and 8(b), a technology of connecting the panel and the driver circuit side disposed on the rear surface side of the panel to each other by using a flexible cable 58 configured as being folded back, instead of the TAB part described in the above-mentioned Patent Document 1, is applied to an information display panel in which at least two kinds of display media configured as particle groups including electrically charged particles, the display media being different from each other in color and charging characteristics, are sealed in a plurality of cells formed between an observation-side panel substrate and a back-side panel substrate, and these two kinds of display media are driven by an electric field generated through an application of a voltage to a counter electrode formed of electrodes which are provided on the two panel substrates and opposed to each other, to thereby display information such as an image.

Illustrated in the examples of Figs. 8(a) and 8(b) are the observation-side transparent substrate 51 forming the information display panel, the back-side substrate 52 forming the information display panel, a driver circuit board 53 mounted with a driver circuit disposed on the rear surface side of the back-side substrate, a display medium accommodating layer 54 between the observation-side transparent substrate 51 and the back-side transparent substrate 52, the display medium accommodating layer having the display media arranged therein, a connecting electrode 55 on the observation side for use in connecting to a driving electrode arranged on the observation-side transparent substrate 51, and a connecting electrode 56 on the back-side for use in connecting to a driving electrode arranged on the back-side substrate 52. In general, the information display panel and the drive unit are configured as described above, to thereby make the information display device compact. In the information display device configured as described above, in the example illustrated in Fig. 8(a), the connecting electrode 55 on the observation side of the information display panel and a connector 57 provided on a driver circuit board 53 are connected to each other by using a tape carrier package (TCP) 58 configured as being folded back, the TCP being a flexible cable mounted with a driver IC chip (the driver IC chip is not mounted in the drawing). Further, in the example illustrated in Fig. 8(b), the connecting electrode 56 on the back side and the connector 57 provided on the driver circuit board 53 are connected to each other by using the TCP 58 configured as being folded back, the TCP being a flexible cable mounted with a driver IC chip (not shown in the drawing).

### DISCLOSURE OF THE INVENTION

### PROBLEMS TO BE SOLVED BY THE INVENTION

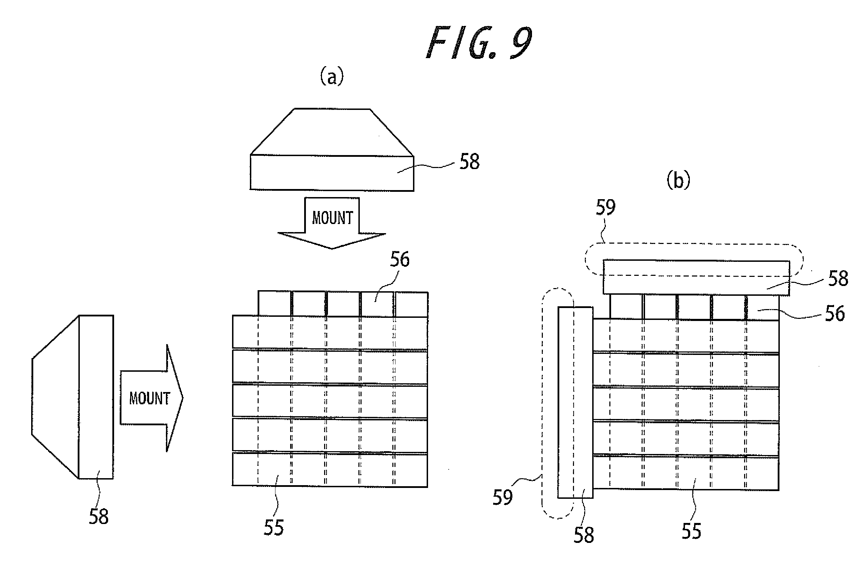

In the conventional information display panel illustrated in Figs. 8(a) and 8(b) described above, a flexible portion of the TCP 58 needs to be folded back to the rear side of the panel substrate when connecting the TCP 58 connected to the connecting electrode 55 on the observation side to the driver circuit board 53 side. As a result, a flexed portion 59 of the TCP 58 protrudes outside from the panel substrate, and the TCP mounting region including the protruding portion forms a so-called frame, leading to a problem that a screen (information display region) on observation side of the panel is reduced in area. Fig. 9(a) illustrates the TCP 58 before being folded back, and Fig. 9(c) illustrates a state in which connection is made by folding back the TCP 58. Further, the concentration of stress occurs at the flexed portion 59 of the TCP 58, which also results in a trouble that the electrode wire formed thereon becomes susceptible to disconnection. Further, due to the stress generated by flexing the TCP 58, a force is also applied to an anisotropic conductive connection portion using an anisotropic conductive film (ACF) or an anisotropic conductive paste (ACP), which results in a failure in the adhesion to thereby cause disconnection.

The present invention has been made to solve the above-mentioned problem. That is, according to the present invention, a connecting electrode terminal provided on a driver circuit board forming a drive unit to be disposed on a rear side of an information display panel and a connecting electrode terminal for a pixel electrode provided on the information display panel can be connected to each other without the need to folding back a connecting member such as a flexible cable so as to prevent the connecting member from protruding outside in part. Therefore, it is an object of the present invention to provide an information display panel with a narrower frame and to provide an information display panel as an information display device capable of avoiding disconnection in the electrode and the anisotropic conductive connecting portion.

### MEANS FOR SOLVING THE PROBLEM

An information display panel according to the present invention includes: a transparent first substrate having transparent pixel electrodes formed in an information display screen region, first connecting electrodes formed as line electrodes drawn from said pixel electrodes to a region outside the information display screen region, and third connecting electrode formed as different line electrodes that are not connected to said first connecting electrodes; and a film-like second substrate having pixel electrodes formed in the information display screen region, and second connecting electrodes formed as line electrodes drawn from said pixel electrodes to a region outside the information display screen region, wherein the transparent pixel electrodes on the transparent first substrate and the pixel electrodes on the second substrate are opposed to each other so as to form a space between the first substrate and the second substrate opposing to each other, in which a display media is sealed in the information display screen region; and wherein second connecting electrodes and one of electrode terminals of each of said third connecting electrodes are connected to each other via an anisotropic conductive connecting member; wherein another one of the electrode terminals of each of said third connecting electrodes and an electrode terminal of said first connecting electrodes are electrically connected, via a connecting wiring substrate, to a connecting electrode terminal provided to a driver circuit board on a drive unit side, which is disposed on a rear side of said second substrate, the connecting wiring substrate being mounted without being folded back while allowing a connecting end to the driver circuit side to face inward to be electrically connected to the drive unit, to thereby drive the display media via the opposing pixel electrodes in order to cause information to be displayed.

Further, in a preferred example of the information display panel of the present invention: the transparent pixel electrodes formed in the information display screen region on said transparent first substrate are transparent stripe electrodes, and the pixel electrodes formed in the information display screen region on said second substrate are stripe electrodes; the transparent pixel electrodes formed in the information display screen region on said transparent first substrate are transparent common electrodes, and the pixel electrodes formed in the information display screen region on said second substrate are electrodes with TFT; the anisotropic conductive connecting member for electrically connecting said second connecting electrodes and said third connecting electrodes to each other is an anisotropic conductive connecting member formed of a non-conductive resin containing conductive particles, and when a space between said second connecting electrodes and a space between said third connecting electrodes are both defined as D 1 while an average particle diameter of said conductive particles is defined as D2, a relation of D1/D2>3 is established; said film-like second substrate has a thickness in a range of 50 µm to 500 µm; the another one of electrode terminals of each of said third connecting electrodes and the electrode terminal of said first connecting electrodes are electrically connected, by means of a flexible substrate as a connecting wiring substrate, to the connecting electrode terminal provided to the driver circuit board on the drive unit side, which is disposed on the rear side of said second substrate, the flexible substrate having connecting electrodes formed thereon; and the another one of electrode terminals of each of said third connecting electrodes and the electrode terminal of said first connecting electrodes are electrically connected, by means of a flexible substrate as a connecting wiring substrate, to the connecting electrode terminal provided to the driver circuit board on the drive unit side, which is disposed on the rear side of said second substrate, the flexible substrate having connecting electrodes a driver IC chip mounted thereon.

### EFFECT OF THE INVENTION

The information display panel according to the present invention is configured by including: a transparent first substrate having transparent pixel electrodes formed in an information display screen region, first connecting electrodes formed as line electrodes drawn from said pixel electrodes to a region outside the information display screen region, and third connecting electrode formed as different line electrodes that are not connected to said first connecting electrodes; and a film-like second substrate having pixel electrodes formed in the information display screen region, and second connecting electrodes formed as line electrodes drawn from said pixel electrodes to a region outside the information display screen region; wherein the transparent pixel electrodes on the transparent first substrate and the pixel electrodes on the second substrate are opposed to each other so as to form a space between the first substrate and the second substrate opposing to each other, in which a display media is sealed in the information display screen region; wherein said second connecting electrodes and one of electrode terminals of each of said third connecting electrodes are connected to each other via an anisotropic conductive connecting member; and wherein another one of the electrode terminals of each of said third connecting electrodes and an electrode terminal of said first connecting electrodes are electrically connected, via a connecting wiring substrate, to a connecting electrode terminal provided to a driver circuit board on a drive unit side, which is disposed on a rear side of said second substrate, the connecting wiring substrate being mounted without being folded back while allowing a connecting end to the driver circuit side to face inward to be electrically connected to the drive unit, to thereby drive the display media via the opposing pixel electrodes in order to cause information to be displayed. With this configuration, the connecting wiring substrate is mounted, outside the information display screen region on the transparent first substrate, on an inner surface side of the transparent first substrate, that is, on a rear side in relation to the observation-side, to thereby eliminate the protruding portion of the connecting wiring substrate which is conventionally formed otherwise when the connecting wiring substrate is folded back to be connected to the driver circuit board side having a driver circuit mounted thereon, As a result, the frame portion can be reduced in area.

Further, according to the present invention, each wiring substrate can be formed smooth without having any portion flexed when connected to the driver circuit side formed on the driver circuit substrate. As a result, the concentration of stress does not occur, and hence cable disconnection can be prevented.

### BRIEF DESCRIPTION OF THE DRAWINGS

Figs. 1(a) and 1B each are views for illustrating an example of an information display panel according to the present invention.
Figs. 2(a) and 2(b) each are views for illustrating an example of an information display panel according to the present invention.
Figs. 3 (a) and 3(b) are views each for illustrating an example of a first substrate and an example of a second substrate, respectively, for forming a panel part of the information display panel according to the present invention.
Figs. 4(a) and 4(b) are views for illustrating another example of a first substrate and a second substrate for forming a panel part of the information display panel according to the present invention.
Figs. 5(a) to 5(c) are views for illustrating an example of the information display panel according to the present invention.
Figs. 6(a) and 6(b) are views each schematically illustrating a state of a TCP mounting part in the information display panel according to the present invention.
Figs. 7(a) and 7(b) are views each illustrating an ACS connection in the information display panel according to the present invention.
Figs. 8(a) and 8(b) are views for illustrating an example a conventional information display panel.
Figs. 9(a) and 9(b) each are views each schematically illustrating an example of a state of a TCP mounting part in the conventional information display panel.

### BEST MODE FOR CARRYING OUT THE INVENTION

First, as an example of an information display device according to the present invention, description is given of a configuration of an information display panel which employs a particle group containing electrically charged particles as a drivable display medium. In the information display panel, an electric field is applied to a display medium configured as a particle group containing electrically charged particles sealed between two opposing substrates. The display medium is attracted, along the direction of the electric field thus applied, by a force generated by the electric field or Coulomb's force, and the display medium moves according to the change in the direction of the electric field, with the result that information such as an image is displayed. Therefore, the information display panel needs to be designed such that uniform movement of the display medium can be ensured and that stable operation of the display medium in repeatedly rewriting display information or in continuously displaying display information can be maintained. Here, conceivable forces to be applied to the particles forming the information medium may include, other than the attracting force generated between the particles due to Coulomb's force, an electric image force, an intermolecular force, a capillary force, and a gravitational force with respect to electrodes or substrates.

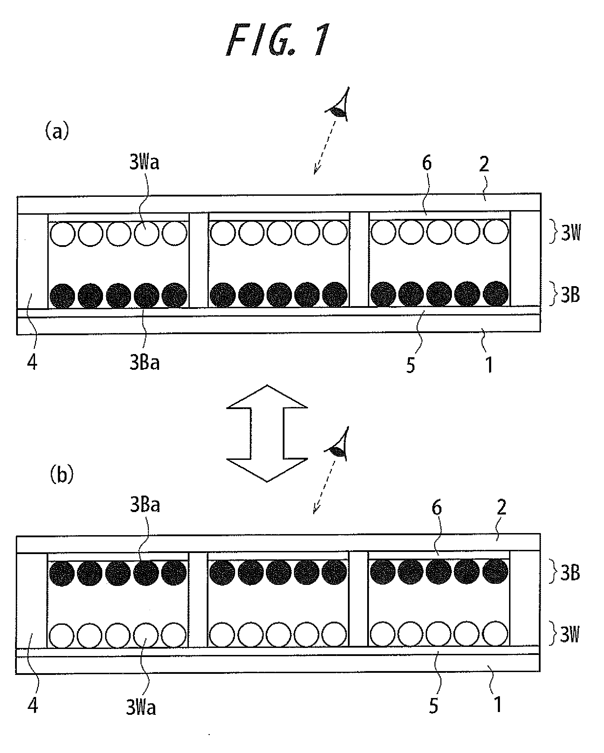

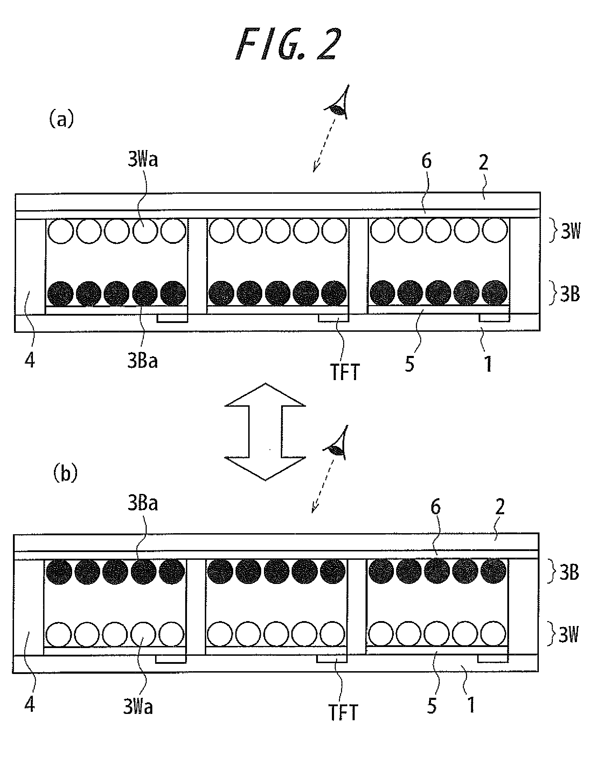

Examples of the information display panel of electric-field driven charged particle type according to the present invention are described with reference to Figs. 1(a) and 1(b) to Figs. 2(a) and 2(b).

The example illustrated in Figs. 1(a) and 1(b) is configured as passive-drive type, in which at least two kinds of display media (illustrated as a white display medium 3W configured as a particle group containing negatively-charged white particles 3Wa and a black display medium 3B configured as a particle group containing positively-charged black particles 3Ba) which are configured as particle groups containing particles each having at least an optical reflectivity and charging properties, the two display media being different in optical reflectivity and charging characteristics, are arranged in each cell formed by partition walls 4. A stripe electrode 6 formed on a substrate 2 and a stripe electrode 5 formed on a substrate 1 are orthogonally opposed to each other, to thereby form a pixel electrode pair. A voltage is applied to the pixel electrode pair to thereby generate an electric field, so that the display media are moved perpendicularly to the substrates 1 and 2 according to the electric field thus generated. Then, as illustrated in Fig. 1(a), the white display medium 3W is to be visually identified by an observer, or, as illustrated in Fig. 1 (b), the black display medium 3(b) is to be visually identified by an observer, with the result that black and white dot matrix display is performed. It should be noted that, in Figs. 1(a) and 1(b), partition walls provided on the near side are not illustrated.

The example illustrated in Figs. 2(a) and 2(b) is configured as active-drive type, in which at least two kinds of display media (illustrated as a white display medium 3W configured as a particle group containing negatively-charged white particles 3Wa and a black display medium 3B configured as a particle group containing positively-charged black particles 3Ba which are configured as particle groups containing particles each having at least an optical reflectivity and charging properties, the two display media being different in optical reflectivity and charging characteristics, are arranged in each cell formed by partition walls 4. An electrode 5 (pixel electrode with TFT) formed on the substrate 1 and an electrode 6 (common electrode) formed on the substrate 2 are opposed to each other, to thereby form a pixel electrode pair. A voltage is applied to the pixel electrode pair to thereby generate an electric field, so that the display media are moved perpendicularly to the substrates 1 and 2 according to the electric field thus generated. Then, as illustrated in Fig. 2(a), the white display medium 3W is to be visually identified by an observer, or, as illustrated in Fig. 2(b), the black display medium 3(b) is to be visually identified by an observer, with the result that black and white dot matrix display is performed.
It should be noted that, in Figs. 1(a) and 1(b), partition walls provided on the near side are not illustrated.
The drive system illustrated with reference to Figs. 2(a) and 2(b) can also be applied to an information display panel in which the white display medium 3W and the black display medium 3B are sealed in microcapsules together with a transparent insulating liquid and the microcapsules are arranged between the substrate 1 and the substrate 2.

The information display panel according to the present invention has a feature in that the information display panel configured as described above includes: a transparent first substrate having transparent pixel electrodes formed in an information display screen region, first connecting electrodes formed as line electrodes drawn from said pixel electrodes to a region outside the information display screen region, and third connecting electrode formed as different line electrodes that are not connected to said first connecting electrodes; and a film-like second substrate having pixel electrodes formed in the information display screen region, and second connecting electrodes formed as line electrodes drawn from said pixel electrodes to a region outside the information display screen region, wherein the transparent pixel electrodes on the transparent first substrate and the pixel electrodes on the second substrate are opposed to each other so as to form a space between the first substrate and the second substrate opposing to each other, in which a display media is sealed in the information display screen region; wherein said second connecting electrodes and one of electrode terminals of each of said third connecting electrodes are connected to each other via an anisotropic conductive connecting member; and wherein another one of the electrode terminals of each of said third connecting electrodes and an electrode terminal of said first connecting electrodes are electrically connected, via a connecting wiring substrate, to a connecting electrode terminal provided to a driver circuit board on a drive unit side, which is disposed on a rear side of said second substrate, the connecting wiring substrate being mounted without being folded back while allowing a connecting end to the driver circuit side to face inward to be electrically connected to the drive unit, to thereby drive the display media via the opposing pixel electrodes in order to cause information to be displayed.

In the following, specific examples of the information display panel according to the present invention are described with reference to the drawings.

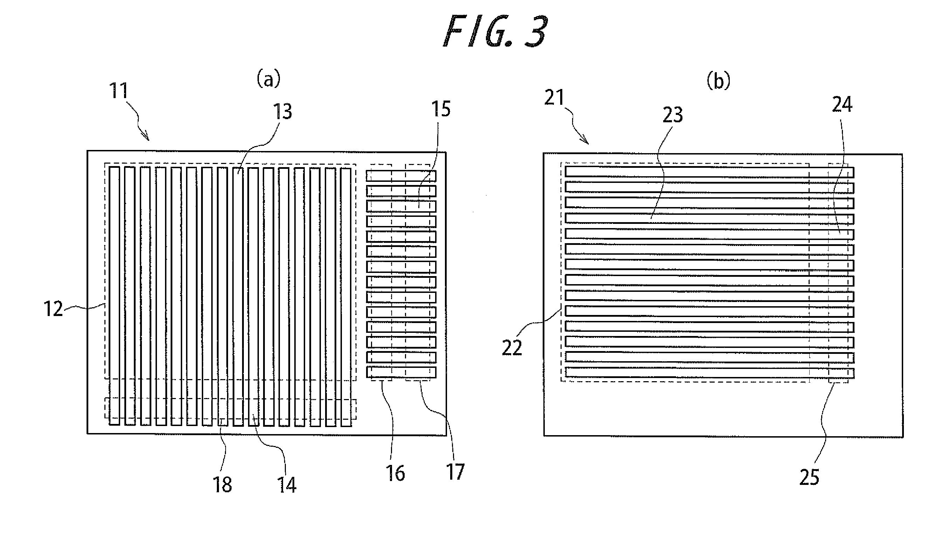

Figs. 3(a) and 3(b) are views each for illustrating an example of a first substrate and an example of a second substrate for forming a panel part of a passive-drive information display panel of dot matrix display type to which the present invention is applied. Fig. 3(a) illustrates an observation-side transparent electrode 11 as the first substrate, and Fig. 3(b) illustrates a back-side substrate 21 as the second substrate.

The observation-side transparent substrate 11 illustrated in Fig. 3 (a) is configured as a transparent substrate on which transparent stripe electrodes 13 (pixel electrodes formed of a transparent conductive film), first connecting electrodes 14, and third connecting electrodes 15 are formed. The transparent stripe electrodes 13 are formed in the information display screen region 12. The first connecting electrodes 14, which are leading lines (conductive film) from the stripe electrodes 13, are formed in a region outside the information display screen region 12. The third connecting electrodes 15 are for use in connecting to second connecting electrodes 24, which are lines (conductive film) drawn from stripe electrodes 23 (conductive film) on the back-side substrate 21, and for use in connecting to a connecting electrode terminal (not shown) on a drive unit side, the third connecting electrodes being formed, as illustrated in Fig. 3(b), on the back-side substrate 21 in a region outside an information display screen region 22. The back-side substrate 21 illustrated in Fig. 3(b) is configured as a film substrate on which the stripe electrodes 23 (conductive film), and the second connecting electrodes 24 (conductive film) are formed. The stripe electrodes 23 are formed in the information display screen region 22. The second connecting electrodes 24 (conductive film) are drawn from the stripe electrodes 23 to a region outside the information display screen region 22, and for use in connecting to the third connecting electrodes 15 on the first substrate. The back-side substrate 21 is preferred to be as small as possible in thickness, and preferred to be in a range of 50 µm to 500 µm.

In the example illustrated in Figs. 3(a) and 3(b), the second connecting electrodes 24 drawn from the stripe electrodes 23 on the back-side substrate 21 and one of the electrode terminal of each of the third connecting electrodes 15 on the observation-side transparent substrate 11 are connected to each other through a sealing agent containing conductive particles, namely, an anisotropic conductive seal (ACS), so that an ACS connecting portion 16 for use in connecting to the second connecting electrodes 24 of the back-side electrodes 21 is formed on the third connecting electrodes 15 of the observation-side transparent substrate 11 while an ACS connecting portion 25 for use in connecting to the third connecting electrodes 15 on the observation-side transparent substrate 11 is formed on the second connecting electrodes 24 of the back-side substrate 21. Further, formed on another one of the electrode terminal of each of the third connecting electrodes 15 on the observation-side transparent substrate 11 is a portion 17 for use in connecting to a driver circuit (not shown). Further, formed on the first connecting electrodes 14 on the observation-side transparent substrate 11 is a portion 18 for use in connecting to a driver circuit (not shown).

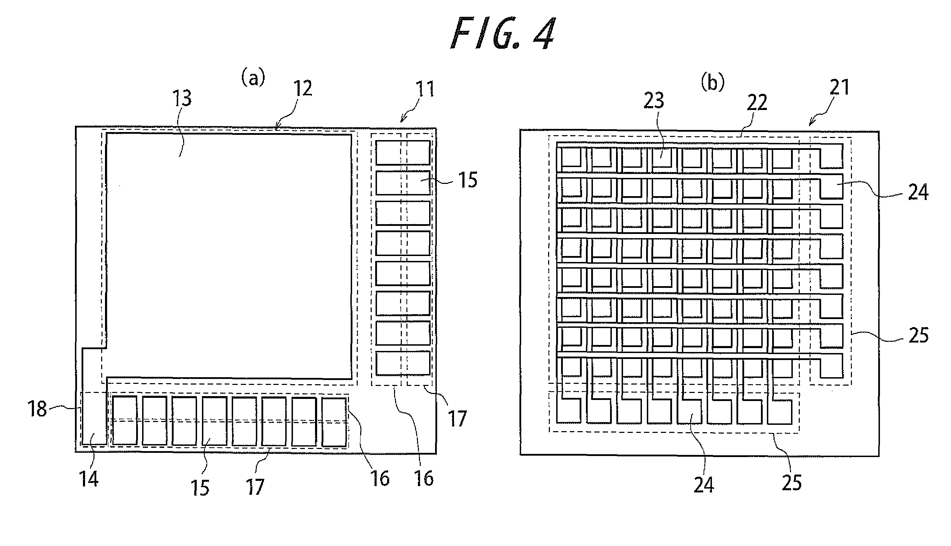

Figs. 4(a) and 4(b) are views each for illustrating another example of the first substrate and another example of the second substrate for forming a panel part of an active-drive information display panel of dot matrix display type to which the present invention is applied. Fig. 4(a) illustrates the observation-side transparent electrode 11 as the first substrate, and Fig. 4(b) illustrates a back-side TFT substrate 21 as the second substrate.

The observation-side transparent substrate 11 illustrated in Fig. 4(a) is configured as a transparent substrate on which transparent common electrode 13 (pixel electrode formed of a transparent conductive film), the first connecting electrode 14, and the third connecting electrodes 15 are formed. The transparent common electrode 13 is formed in the information display screen region 12. The first connecting electrode 14, which is a leading line (conductive film) from the common electrodes 13, is formed in a region outside the information display screen region 12. The third connecting electrodes 15 are for use in connecting to the second connecting electrodes 24, which are line electrodes (gate lines and data lines formed of a conductive film) drawn from pixel electrodes 23 (conductive film) on the back-side substrate 21, and for use in connecting to a connecting electrode terminal (not shown) on a drive unit side, the third connecting electrodes 15 being formed, as illustrated in Fig. 4(b), on the back-side TFT substrate 21 in a region outside the information display screen region 22. The back-side TFT substrate 21 illustrated in Fig. 4(b) is configured as a film substrate on which the stripe electrodes 23 (conductive film) with TFT and the second connecting electrodes 24 (conductive film) are formed. The stripe electrodes 23 with TFT are formed in the information display screen region 22. The second connecting electrodes 24 (conductive film) with TFT, which are for use in connecting to the third connecting electrodes 15 on the first substrate, are drawn from the stripe electrodes 23 with TFT via a gate line and a data line so as to be formed in a region outside the information display screen region 22. The back-side TFT substrate 21 is preferred to be as small as possible in thickness, and preferred to be in a range of 50 µm to 500 µm.

In the example illustrated in Figs. 4(a) and 4(b), the second connecting electrodes 24 drawn from the stripe electrodes 23 with TFT on the back-side TFT substrate 21 and one of the electrode terminal of each of the third connecting electrodes 15 on the observation-side transparent substrate 11 are connected to each other through a sealing agent containing conductive particles, namely, an anisotropic conductive seal (ACS), so that the ACS connecting portion 16 for use in connecting to the second connecting electrodes 24 of the back-side TFT electrodes 21 is formed on the third connecting electrodes 15 of the observation-side transparent substrate 11 while an ACS connecting portion 25 for use in connecting to the third connecting electrodes 15 on the observation-side transparent substrate 11 is formed on the second connecting electrodes 24 of the back-side TFT substrate 21. Further, formed on another one of the electrode terminal of each of the third connecting electrodes 15 on the observation-side transparent substrate 11 is a portion 17 for use in connecting to a driver circuit (not shown). Further, formed on the first connecting electrodes 14 on the observation-side transparent substrate 11 is a portion 18 for use in connecting to a driver circuit (not shown).

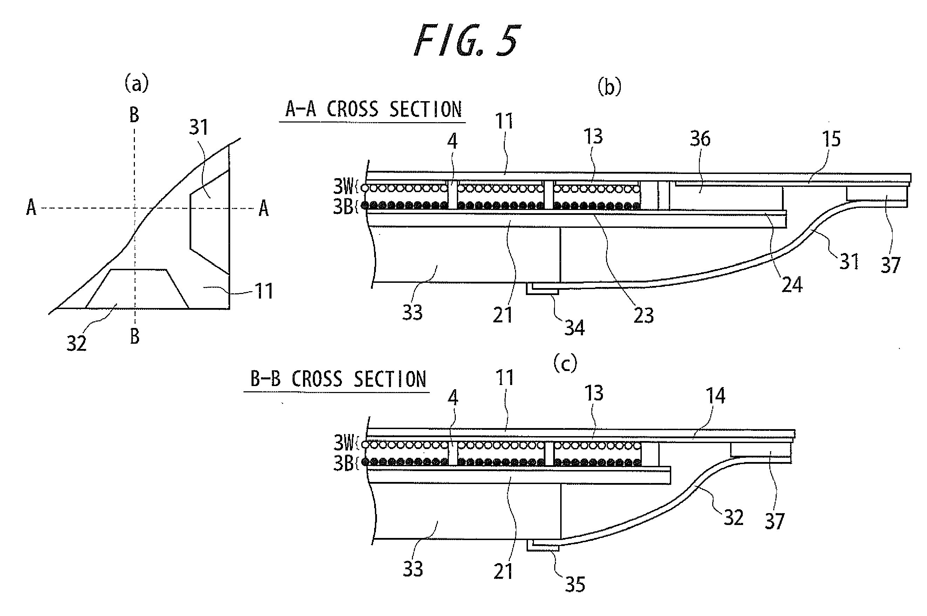

5(a) to 5(c) are views for illustrating an example of the information display panel according to the present invention. Fig. 5(a) shows the information display panel in part, which is viewed from the rear side of the observation-side transparent substrate 11. Further, Fig. 5(b) is a sectional view taken along the line A-A of Fig. 5(a), which is a line traversing the flexible cable 31 serving as a first connecting wiring substrate of Fig. 5(a). Fig. 5(c) is a sectional view taken along the line B-B of Fig. 5(a), which is a line traversing the flexible cable 32 serving as a second connecting wiring substrate in Fig. 5(a), It should be noted that, of the members illustrated in Figs. 5(a) to 5(c), members similar to those illustrated in Figs. 1(a), 1(b) to 4(a), (b) are denoted by the same reference symbols, and the description thereof is omitted.

The example of Fig. 5(a) illustrates a positional relation of the first flexible cable 31 which is mounted on the rear side of the observation-side transparent substrate 11 and to be connected to the first flexible connecting portion 17 illustrated in Fig. 3(a) and the second flexible cable 32 which is mounted on the rear side of the observation-side transparent substrate 11 and to be connected to the second flexible connecting portion 18 illustrated in Fig. 3(a), relative to the observation-side transparent substrate 11.

In the example illustrated in Figs. 5(b) and 5(c), a driver circuit board 33 on the drive unit side is arranged on the rear side of the back-side substrate 21. At this time, a surface of the driver circuit board 33 having no electric component mounted thereon is opposed to the rear side of the back-side substrate 21. The driver circuit board 33 refers to a board on which electronic components necessary for driving, such as a driver circuit and a driver power supply, are mounted. In the example illustrated in Fig. 5(b), an ACS 36 is provided to the ACS connection portion 16 inside the flexible cable connecting portion 17, to thereby electrically connect the second connecting electrodes 24 on the back-side substrate 21 and the one of the electrode terminals of each of the third connecting electrodes 15 on the observation-side transparent substrate 11 to each other. Further, one end of the first flexible cable 31 is electrically connected to the first connector 34 formed on the driver circuit board 33, while another end of the first flexible cable 31 is electrically connected to the first flexible cable connecting portion 17 on the another one of the electrode terminal of each of the third connecting electrodes 15 on the observation-side transparent substrate 11, by means of an ACF 37 formed to the first flexible cable connecting portion 17. In the example illustrated in Fig. 5(c), one end of the second flexible cable 32 is electrically connected to the second connector 35 formed on the driver circuit board 33, while another end of the first flexible cable 31 is electrically connected to the second flexible cable connecting portion 18 on the first connecting electrodes 14 on the observation-side transparent substrate 11, by means of the ACF 37 formed to the second flexible cable connecting portion 18.
The flexible cable serving as a connection wiring substrate is implemented in such a manner that a connecting end thereof to the driver circuit side faces inward, which makes it possible to connect the information display panel to the driver circuit side of the drive unit without folding back the flexible cable.

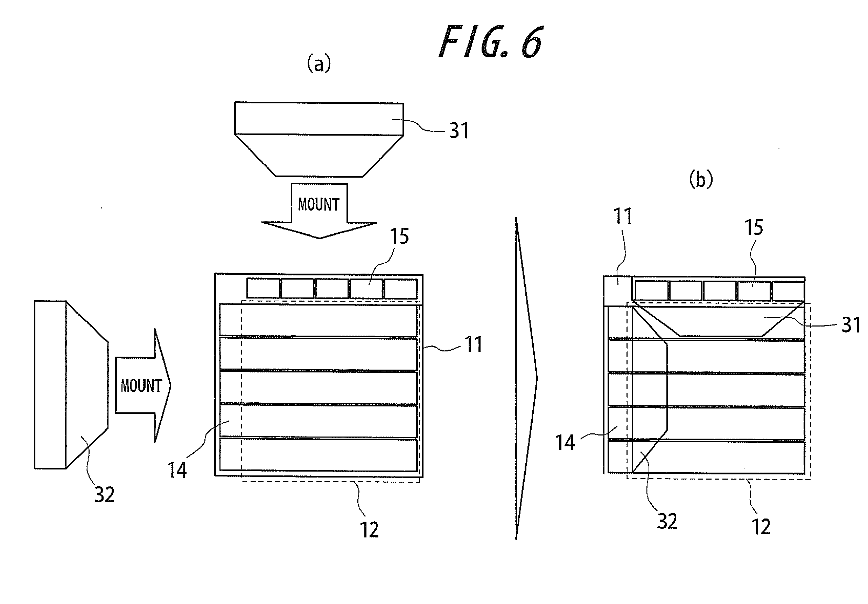

Figs. 6(a) and 6(b) are views each schematically illustrating a state of a connecting portion of a flexible cable, which serves as a wiring substrate for use in connecting to the drive unit side, in the passive-drive information display panel of dot matrix display system to which the present invention is applied. Fig. 6(a) schematically illustrates an example of a state in which the first flexible cable (also called TCP) 31 and the second flexible cable (also called TCP) 32 are yet to be mounted with respect to the observation-side transparent substrate 11, and Fig. 6(b) schematically illustrates an example of a state in which the first flexible cable 31 and the second flexible cable 32 are yet to be mounted with respect to the observation-side transparent substrate 11. As is understood from the above-mentioned examples, according to the information display panel of the present invention, the first TCP 31 and the second TCP 32 can both be disposed completely on the rear side of the observation-side transparent substrate 11, and hence the protruding portion of the flexible cables illustrated in the conventional example of Figs. 9(a) and 9(b) can be eliminated, to thereby narrow the frame of the information display part in the information display device incorporating the drive unit. Further, unlike in the conventional example illustrated in Figs. 9(a) and 9(b), the connecting wiring board (also called flexible cable or TCP) has no deflected portion, with the result that disconnection of the electrodes on the connecting wiring board or disconnection in the connecting portion can be prevented.

It should be noted that a tape carrier package (TCP) having a driver IC chip mounted therein through a tape automated bonding (TAB) technology or a chip on film (COF) technology, a flexible cable having no driver IC chip mounted thereon, or a flexible cable mounted with a driver IC chip may be employed as the connecting wiring board.

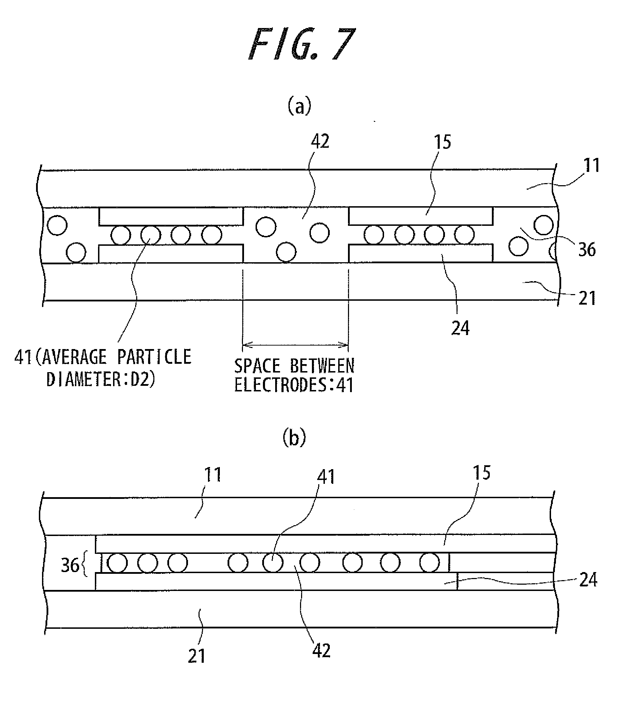

Figs. 7(a) and 7(b) are views each illustrating an ACS connection, as an example of anisotropic conductive connection in the information display panel according to the present invention. Fig. 7(a) illustrates an example viewed from an electrode direction, and Fig. 7(b) illustrates an example viewed from a lateral direction of the electrode. In the example illustrated in Figs. 7(a) and 7(b), the third connecting electrodes 15 on the observation-side transparent substrate 11 and the second connecting electrodes 24 on the back-side substrate 21 are electrically connected to each other by means of an anisotropic conductive connecting member, namely, the ACS 36 in this case. The ACS 36 is formed of a non-conductive resin 42 to serve as a sealing agent, which contains conductive particles 41, and as illustrated in Figs. 7(a) and 7(b), when a space between the second connecting electrodes 24 and a space between the third connecting electrodes 15 are both defined as D1 while an average particle diameter of the conductive particles 41 is defined as D2, it is preferred that a relation of D1/D2>3 is established. The reason is that, if D1/D2 is equal to or smaller than 3, a short-circuit may be caused between the second connecting electrodes 24 and between the third connecting electrodes 15 due to the conductive particles 41.

Next, description is given of the constituent elements forming the information display panel according to the present invention.

In the case where the display medium is configured as a particle group containing electrically charged particles, it is preferred to arrange the display media in cells formed between the observation-side substrate and the back-side substrate of the information display panel. This configuration is capable of preventing uneven distribution of the display medium.
Further, in the case where the display medium is configured as a particle group containing electrically charged particles, there may be preferably employed a configuration in which two kinds of display media, which are different from each other in optical reflectivity and charging characteristics, are arranged in one cell. In this case, each pixel formed by the counter electrode pair and each cell having a combination of at least two kinds of display media arranged therein may be designed to correspond to each other, or may not be designed to correspond to each other. Each pixel and each cell may preferably designed to correspond to each other in a case where a color filter of three primary colors is used in combination with a white display medium and the black display medium to perform color display or in a case where a color display medium of three primary colors is combined with a black display medium or a white display medium to perform color display.

Partition walls may be provided between opposing substrates having a display medium arranged therebetween, to thereby form the cells. Alternatively, the cells may be formed as microcapsules having a display medium sealed therein. Further, in the case of providing an inter-substrate gap securing partition wall for securing a gap between the opposing substrates and a cell forming partition wall having a function of suppressing the movement of a particle group serving as the display medium in a direction parallel to the panel substrate, the inter-substrate gap securing partition wall may preferably have a width in a range of 20 µm to 100 µm, while the cell forming partition wall may preferably have a width which is made as small as possible in a range of 5 µm to 30 µm. Further, the cell forming partition wall may be smaller in height than the inter-substrate gap securing partition wall, without impairing the function of suppressing the movement of a particle group serving as the display medium in a direction parallel to the panel substrate. The cell forming partition walls may be formed in opposing positions on the panel substrates so that the cell forming partition walls may be opposed to each other when the substrates are superposed each other. In this case, the opposing portions may be bonded to each other, or may not be bonded to each other.

Partition wall portions to be provided for the purpose of securing a gap between the panel substrates (panel inter-substrate gap securing partition wall portions) and partition wall portions for partitioning the inter-substrate space into compartments (cell forming partition wall portion) may be arranged in a grid pattern, a honeycomb pattern, or a reticular pattern. Each cell may be in any shape in section, such as a polygonal shape including a rectangular, triangular, hexagonal, and tiered octagon shape, a circular shape, an elliptical shape, a race track shape, or a combination of a plurality of shapes.
A polygonal shape such as a rectangular, hexagonal, or tiered octagonal shape is preferred in view of increasing the aperture ratio of the display part, while a shape defined by curves may be preferred in view of allowing the particles forming the image medium to move with ease. Further, in the case of designing pixels and cells arranged in a matrix to correspond to each other, the partition walls may preferably be formed based on a grid pattern so as to form each cell in a rectangular shape or a tiered octagonal shape. From the above-mentioned point of view, a polygon with rounded corners, such as a rectangle with rounded corners or a tiered octagon with rounded corners may preferably be employed.

As a material for forming partition walls for securing the inter-substrate gap, or for partition walls for securing the inter-substrate gap and to be provided at the boundaries of display areas for performing display of an information image in different display colors, and for partition walls dedicated to forming cells, a dry film resist may preferably be used. As an example, ALPHO NIT2 (manufactured by Nichigo-Morton Co., Ltd.) or PDF 300 (manufactured by Nippon Steel Chemical Co., Ltd.) can be used.

A dry film resist material having a thickness corresponding to the height of a partition wall portion desired to be formed is laminated on the panel substrate, and then patterned through photolithography by using a mask in a predetermined shape.

The width of the partition wall portion for securing the inter-substrate gap may be designed to be in a range of 20 µm to 100 µm while the width of the cell forming partition wall portion may be designed to be in a range of 5 µm to 30 µm, so as to make the width of the cell forming partition wall portion to be smaller than the width of the partition wall portion for securing the inter-substrate gap, which is preferable in that the aperture ratio in the information display screen region is increased.

Examples of the information display panel according to the present invention also include, other than the above-mentioned type of moving charged particles in gases (including vacuum), a type of moving charged particles in a liquid (electrophoresis) and a type of driving liquid crystals.

As for the conductive material for use as a conductive film to be formed into electrodes through patterning, for the first substrate to serve as the transparent observation-side substrate, transparent conductive metal oxides such as indium tin oxide (ITO), indium oxide, indium zinc oxide (IZO), aluminum zinc oxide (AZO), antimony tin oxide (ATO), conductive tin oxide, and conductive zinc oxide may be used, or transparent conductive polymers such as polyaniline, polypyrrole, polythiophene, and poly (3,4-ethylene dioxythiophene)-poly-(styrenesulfonate) (PEDOT: PSS) may be used for the purpose of obtaining a transparent conductive film.

As for the conductive material for use as a conductive film to be formed into electrodes through patterning, for the substrates which are not disposed in the information display screen region on the observation side, conductive metal oxides such as indium tin oxide (ITO), indium oxide, indium zinc oxide (IZO), aluminum zinc oxide (AZO), antimony tin oxide (ATO), conductive tin oxide, and conductive zinc oxide may be used, or conductive polymers such as polyaniline, polypyrrole, polythiophene, and poly (3,4-ethylenedioxythiophene)-poly-(styrenesulfonate) (PEDOT: PSS), metal such as gold, silver, copper, aluminum, nickel, and chrome, or an alloy formed primarily of these metals may be used. The conductive film to be formed into electrodes may be transparent, or may not be transparent.

As for a method of forming a conductive film to be formed into electrodes, there may be employed a method of forming the above-mentioned materials into a thin film through, for example, a sputtering method, a vacuum deposition method, a chemical vapor deposition (CVD) method, or an application method, a method of laminating metal foil (for example, rolled copper foil), or a method of applying the conductive agent mixed in a solvent or a synthetic resin binder. The above-mentioned materials which are conductive and can be pattern-formed may be suitably used. It should be noted that the thickness of the observation-side transparent electrode may take any value as long as the conductivity can be secured without causing any problem in optical transparency, which is preferably 0.01 µm to 10 µm, and more preferably, 0.05 µm to 5 µm. Further, the thickness of the electrodes which are not provided on the observation side may take any value as long as the conductivity can be ensured, and may preferably be in a range of 0.01 µm to 10 µm.

A transparent conductive material of metal oxides such as ITO suited for the electrodes to be formed in the information display screen region on the observation-side transparent substrate (first substrate) is smaller in flexibility as compared to a metal material. When using such a transparent conductive material for forming the observation-side electrodes as stripe electrodes or line electrodes, a metal thin line may preferably used in combination for the purpose of preventing disconnection in the transparent electrode material. The metal thin line may be 1 µm to 10 µm in width so as not to interfere with the visibility of the display, which can be suitably applied to the stripe electrodes to be arranged on the information display screen region. For electrodes to be formed on the back-side substrate (second substrate) and on the connecting wiring substrate, the above-mentioned metal materials, which are small in electric resistance and excellent in flexibility, may be suitably used, because there is no need to give consideration to optical transparency.

For the connecting wiring substrate for the information display panel according to the present invention, a flexible insulating substrate in a film-like shape having a thickness of 25 µm to 200 µm can be preferably employed. Examples of a material suited thereto may include, for example, polyethylene terephthalate (PET), polyethylene naphthalate (PEN), polyimide (PI), polyethylene (PE), polypropylene (PP), polymethylmethacrylate (PMMA), polycarbonate (PC), and poly ether sulphon (PES).

### <Examples>

In the following, actual examples are described.

On the first substrate (observation-side substrate) and on the second substrate (back-side substrate) of the information display panel in the examples, stripe electrodes with 600 lines on the column side and stripe electrodes with 800 lines on the row side were formed, respectively. In this manner, a dot matrix with a pixel count of 600×800 (about 100 ppi) was formed, to thereby obtain a passive-drive type information display panel. Then, three 320-pin driver ICs are provided on the row electrode side and two 320-pin driver ICs are provided on the column electrode side, so as to be produced as an information display panel in approximately A5 size with the information display screen region having a diagonal of 10 inches.

As for the display media, as described in below, a black display medium configured as a particle group containing positively-charged black particles and a white display medium configured as a particle group containing negatively-charged white particles were employed. Partition walls were arranged in a grid pattern so that cells each having a rectangular aperture corresponding to the size of each pixel can be formed as being surrounded by the partition walls. The two kinds of display media are filled in the cells so as to be combined for a volume fraction of 25 vol%, to thereby manufacture the information display panel.

### (Black Display Medium: Black Particle Group)

Polymethylpentene polymer (TPX-R18: manufactured by Mitsui Chemicals, Inc.) of 100 pts.wt., a carbon black (Special Black 4: manufactured by Degussa AG) of 5 pts.wt. as a colorant, and a nigrosine compound (BONTRON N-07: manufactured by Orient Chemical Industries Co., Ltd.) of 3 pts.wt. as a charge control agent for positive charge were melt-kneaded by a biaxial kneading machine, and the resultant was finely pulverized by a jet mill (LABO Jet Mill IDS-LJ: manufactured by Nippon Pneumatic Mfg. Co., Ltd.), classified by a classifier (MDS-2: manufactured by Nippon Pneumatic Mfg. Co., Ltd.), and fuse rounded by using a surface fusing system (rounding equipment) (MR-10: manufactured by Nippon Pneumatic Mfg. Co., Ltd.). As a result, a positively-charged black particle group with an average particle diameter of 9.2 µm was obtained.

### (White Display Medium: White Particle Group)

Polymethylpentene polymer (TPX-R18: manufactured by Mitsui Chemicals, Inc.) of 100 pts.wt., a titanium dioxide (TIPAQUE CR-90: manufactured by ISHIHARA SANGYO KAISHA, LTD.) of 100 pts.wt. as a colorant, and a phenolic condensate (BONTRON E-89: manufactured by Orient Chemical Industries Co., Ltd.) of 5 pts.wt. as a charge control agent for negative charge were melt-kneaded by a biaxial kneading machine, and the resultant was finely pulverized by a jet mill (LABO Jet Mill IDS-LJ: manufactured by Nippon Pneumatic Mfg. Co., Ltd.), classified by a classifier (MDS-2: manufactured by Nippon Pneumatic Mfg. Co., Ltd.), and melt-rounded by using a surface fusing system (rounding equipment) (MR-10: manufactured by Nippon Pneumatic Mfg. Co., Ltd.). As a result, a negatively-charged white particle group with an average particle diameter of 9.5 µm was obtained.

### <Example 1>

The first substrate was formed as a transparent film of 125 µm in thickness with electrodes which were formed of tin-doped indium oxide (ITO) in stripes on a transparent polyethylene terephthalate film (PET film). The second substrate was formed as a transparent film of 125 µm in thickness with electrodes which were formed of tin-doped indium oxide (ITO) in stripes on a transparent polyethylene terephthalate film (PET film). The first substrate and the second substrate were bonded to each other in such a manner that the stripe electrodes formed on the first substrate and the stripe electrodes formed on the second substrate were orthogonally opposed to each other, with the display media being sealed between the substrates, to thereby form a display panel. The first stripe electrodes were extended, as connecting line electrodes, outside the information display screen region. The second stripe electrodes were extended, as connecting line electrodes, outside the information display screen region. The first substrate has connecting line electrodes formed thereon, which were different from the stripe electrodes formed in the information display screen region, outside the information display screen region, for the purpose connecting the stripe electrodes on the second substrate to the line electrodes formed outside the information display screen region through the substrates (inter-substrate conduction). The connecting line electrodes were formed of ITO in a direction perpendicular to the stripe electrodes formed in the information display screen region on the first substrate.

The inter-substrate conduction was made by using an anisotropic conductive connecting member (ACS) containing conductive particles of 10 µm in average particle diameter, which was disposed between the connecting line electrodes opposing to one another on the outside of the information display screen region. Each space between the connecting line electrodes of the ACS connection was set to 35 µm. The two substrates were spaced apart by 40 µm by using an inter-substrate gap securing member, and the second substrate was deflected so as to make the ACS connection. Next, as illustrated in Figs. 6(a) and 6(b), the connecting line electrodes extended from the stripe electrodes on the first substrate to the outside of the information display screen region and a flexible cable (also called TCP) mounted with a driver IC were electrically connected to each other by using an anisotropic conductive film (ACF) containing conductive particles of 5 µm in average diameter. Further, as illustrated in Figs. 6(a) and 6(b), the connecting line electrodes formed on the first substrate were also electrically connected, at an outer end thereof, to a TCP mounted with a driver IC, by using the ACF. Each space between the line electrodes at the connecting portion was set to 20 µm. As a result, the information display panel according to the present invention was obtained. A driver circuit board including a driver circuit formed by mounting components only on one surface of glass-epoxy substrate (glass fiber reinforced epoxy resin substrate) while maintaining another surface flat was arranged on the rear side of the information display panel with the flat surface being faced inward, and the TCP of the information display panel was connected to the connector of the driver circuit board, to thereby form the information display device, in which the information display panel was driven.

### <Result>

The information display panel was driven so as to display a test image. As a result, excellent display was obtained without any trouble such as disconnection. A portion outside the information display screen region where display cannot be performed, which is generally called frame, was very small in area, which made the information display part physically appear larger than the actual size of the information display screen region, Further, there occurred no such trouble as a failure in the adhesion in the ACS connection or in the ACF connection even after the TCP was repeatedly attached to or detached from the connector or the panel was lightly bent repeatedly in a peripheral part thereof in which the connection to the TCP or the inter-substrate conduction was made. Also, despite the thin film-like panels employed therein, in manually handling the entire information display device in which the information display panel and the driver circuit board were superposed each other, the information display device, which includes the drive circuit board thus superposed, had a body strong enough to allow the device to stand itself even when the edge thereof was held by hand, and there occurred no such trouble as being bent to cause a brakeage.

### <Example 2>

The information display panel similar to the information display panel according to Example 1 was employed. A driver circuit board including a driver circuit formed by mounting components only on one surface of glass-epoxy substrate (glass fiber reinforced epoxy resin substrate) while maintaining another surface flat was bonded to the rear side of the information display panel with adhesives being placed on the four corners of the flat surface and the flat surface being faced inward, and the TCP of the information display panel was connected to the connector of the driver circuit board, to thereby form the information display device, in which the information display panel was driven.

### <Result>

The information display panel was driven so as to display a test image. As a result, excellent display was obtained without any trouble such as disconnection. A portion outside the information display screen region where display cannot be performed, which is generally called frame, was very small in area, which made the information display part physically appear larger than the actual size of the information display screen region. Further, there occurred no such trouble as a failure in the adhesion in the ACS connection or in the ACF connection even after the TCP was repeatedly attached to or detached from the connector or the panel was lightly bent repeatedly in a peripheral part thereof in which the connection to the TCP or the inter-substrate conduction was made. Also, despite the thin film-like panels employed therein, the information display panel and the driver circuit board were integrally formed as being superposed each other, the information display panel which includes the drive circuit board thus superposed, had a body strong enough to allow the device to stand itself even when the edge thereof was held by hand, and there occurred no such trouble as being bent to cause a brakeage.

### <Comparative Example 1>

The first substrate was formed as a transparent film of 125 µm in thickness with electrodes which were formed as ITO electrodes in stripes on a transparent PET film. The second substrate was formed as a transparent film of 125 µm in thickness with electrodes which were formed as ITO electrodes in stripes on a transparent PET film. The first substrate and the second substrate were bonded to each other in such a manner that the stripe electrodes formed on the first substrate and the stripe electrodes formed on the second substrate were orthogonally opposed to each other, with the display media being sealed between the substrates, to thereby form a panel. The first stripe electrodes were extended, as connecting line electrodes, outside the information display screen region. The second stripe electrodes were extended, as connecting line electrodes, outside the information display screen region.

Next, the connecting line electrodes extended from the stripe electrodes on the first substrate to the outside of the information display screen region and a flexible cable (also called TCP) mounted with a driver IC were electrically connected to each other by using an anisotropic conductive film containing conductive particles of 5 µm in average diameter. Further, the connecting line electrodes extended from the stripe electrodes on the second substrate to the outside of the information display screen region and a flexible cable (also called TCP) mounted with a driver IC were electrically connected to each other by using an anisotropic conductive film (ACF) containing conductive particles of 5 µm in average diameter. Each space between the line electrodes at the connecting portion was set to 20 µm. As a result, a conventional information display panel was obtained. A driver circuit board including a driver circuit formed by mounting components only on one surface of glass-epoxy substrate (glass fiber reinforced epoxy resin substrate) while maintaining another surface flat was arranged on the rear side of the information display panel with the flat surface being faced inward, and the TCP of the information display panel was configured as being folded back 180 degrees so as to be connected to the connector of the driver circuit board, to thereby form the information display device, in which the information display panel was driven.

### <Result>

The information display panel was driven so as to display a test image. As a result, excellent display was obtained without any trouble such as disconnection. A portion outside the information display screen region where display cannot be performed, which is commonly called frame, includes a protruding portion of the TCP, which made the information display part physically appear smaller than the actual size of the information display screen region. Further, after the TCP was attached to and detached from the connector repeatedly about 10 times, there occurred a failure in the adhesion in the ACF connection after. Also, after the panel was lightly bent repeatedly in a peripheral portion thereof in which the connection to the TCP was made, part of the test image was failed to be displayed due to disconnection caused by the failure occurred in the ACF connection.

### <Comparative Example 2>

The first substrate was formed as a transparent glass film of 700 µm in thickness with electrodes which were formed as ITO electrodes in stripes on a glass sheet. The second substrate was formed as a transparent glass substrate of 700 µm in thickness with electrodes which were formed as ITO electrodes in stripes on a glass sheet. The first substrate and the second substrate were bonded to each other in such a manner that the stripe electrodes formed on the first substrate and the stripe electrodes formed on the second substrate were orthogonally opposed to each other, with the display media being sealed between the substrates, to thereby form a panel. The first stripe electrodes were extended, as connecting line electrodes, outside the information display screen region. The second stripe electrodes were extended, as connecting line electrodes, outside the information display screen region. The first substrate has connecting line electrodes formed thereon, which were different from the stripe electrodes formed in the information display screen region, outside the information display screen region, for the purpose connecting the stripe electrodes on the second substrate to the line electrodes formed outside the information display screen region through the substrates (inter-substrate conduction). The connecting line electrodes were formed in a direction perpendicular to the stripe electrodes formed in the information display screen region on the first substrate.

The inter-substrate conduction was made by using an anisotropic conductive connecting member (ACS) containing conductive particles of 40 µm in average particle diameter, which was disposed between the connecting line electrodes opposing to one another on the outside of the information display screen region. The two substrates were spaced apart by 40 µm by using an inter-substrate gap securing member, and each space between the connecting line electrodes of the ACS connection was set to 100 µm, which was larger than the particle diameter of the conductive particles. Next, the connecting line electrodes extended from the stripe electrodes on the first substrate to the outside of the information display screen region and a flexible cable (also called TCP) mounted with a driver IC were electrically connected to each other by using an anisotropic conductive film (ACF) containing conductive particles of 5 µm in average diameter. Further, the connecting line electrodes formed on the first substrate were also electrically connected, at an outer end portion thereof, to a TCP mounted with a driver IC, by using the ACF. Each space between the line electrodes at the connecting portion was set to 20 µm, As a result, a conventional information display panel was obtained. A driver circuit board including a driver circuit formed by mounting components only on one surface of glass-epoxy substrate (glass fiber reinforced epoxy resin substrate) while maintaining another surface flat was arranged on the rear side of the information display panel with the flat surface being faced inward, and the TCP of the information display panel was connected to the connector of the driver circuit board, to thereby form the information display device, in which the information display panel was driven.

### <Result>

The information display panel was driven so as to display a test image. As a result, a trouble such as a leakage sometimes occurred in the ACS connection. A conceivable reason may be that the particle diameter D2 of the conductive particles contained in the ACS and the space D 1 between the connecting line electrodes in the ACS connecting part do not satisfy the relation of D1/D2>3. A portion outside the information display screen region where display cannot be performed, which is commonly called frame, was narrowed, which made the information display part physically appear larger than the actual size of the information display screen region. However, even in the information display panel that did not suffer the above-mentioned trouble, the wiring portion of the TCP was damaged after the TCP was repeatedly attached to and detached from the connector, maybe because the edge portion of the second substrate was hit against the connecting TCP, leading to partial disconnection, with the result that part of the test image was failed to be displayed.

### INDUSTRIAL APPLICABILITY

The information display panel according to the present invention can be suitably used for: a display part of mobile equipment such as a laptop computer, a PDA, a mobile phone, and a handy terminal; electronic paper such as an electronic book, an electronic newspaper, and an electronic manual (instruction manual); a bulletin board such as a billboard, a poster, and a blackboard; a display part of, for example, a calculator, home electric appliances, and automobile equipment; a card display part of, for example, a loyalty point card and an IC card; a display part of, for example, an electronic advertisement, electronic point of presence or point of purchase advertising (POP), an electronic price tag, an electronic shelf label, an electronic score, and an RF-ID device; and a display part to be connected to external display rewriting means for performing rewrite of the display (so-called rewritable paper).

## Claims

1. An information display panel, comprising:
a transparent first substrate having transparent pixel electrodes formed in an information display screen region, first connecting electrodes formed as line electrodes drawn from said pixel electrodes to a region outside the information display screen region, and third connecting electrode formed as different line electrodes that are not connected to said first connecting electrodes; and
a film-like second substrate having pixel electrodes formed in the information display screen region, and second connecting electrodes formed as line electrodes drawn from said pixel electrodes to a region outside the information display screen region,
wherein the transparent pixel electrodes on the transparent first substrate and the pixel electrodes on the second substrate are opposed to each other so as to form a space between the first substrate and the second substrate opposing to each other, in which a display media is sealed in the information display screen region;
wherein said second connecting electrodes and one of electrode terminals of each of said third connecting electrodes are connected to each other via an anisotropic conductive connecting member; and
wherein another one of the electrode terminals of each of said third connecting electrodes and an electrode terminal of said first connecting electrodes are electrically connected, via a connecting wiring substrate, to a connecting electrode terminal provided to a driver circuit board on a drive unit side, which is disposed on a rear side of said second substrate, the connecting wiring substrate being mounted without being folded back while allowing a connecting end to the driver circuit side to face inward to be electrically connected to the drive unit, to thereby drive the display media via the opposing pixel electrodes in order to cause information to be displayed,

2. The information display panel according to claim 1, wherein the transparent pixel electrodes formed in the information display screen region on said transparent first substrate are transparent stripe electrodes, and the pixel electrodes formed in the information display screen region on said second substrate are stripe electrodes.

3. The information display panel according to claim 1, wherein the transparent pixel electrodes formed in the information display screen region on said transparent first substrate are transparent common electrodes, and the pixel electrodes formed in the information display screen region on said second substrate are electrodes with TFT.

4. The information display panel according to any one of claims 1 to 3,
wherein the anisotropic conductive connecting member for electrically connecting said second connecting electrodes and said third connecting electrodes to each other is an anisotropic conductive connecting member formed of a non-conductive resin containing conductive particles; and
wherein, when a space between said second connecting electrodes and a space between said third connecting electrodes are both defined as D1 while an average particle diameter of said conductive particles is defined as D2, a relation of D1/D2>3 is established.

5. The information display panel according to any one of claims 1 to 4, wherein said film-like second substrate has a thickness in a range of 50 µm to 500 µm.

6. The information display panel according to any one of claims 1 to 5, wherein the another one of electrode terminals of each of said third connecting electrodes and the electrode terminal of said first connecting electrodes are electrically connected, by means of a flexible substrate as a connecting wiring substrate, to the connecting electrode terminal provided to the driver circuit board on the drive unit side, which is disposed on the rear side of said second substrate, the flexible substrate having connecting electrodes formed thereon.

7. The information display panel according to any one of claims 1 to 5, wherein the another one of electrode terminals of each of said third connecting electrodes and the electrode terminal of said first connecting electrodes are electrically connected, by means of a flexible substrate as a connecting wiring substrate, to the connecting electrode terminal provided to the driver circuit board on the drive unit side, which is disposed on the rear side of said second substrate, the flexible substrate having connecting electrodes a driver IC chip mounted thereon.
